# EUROPÄISCHE PATENTANMELDUNG

(11) **EP 1 331 426 A2**
(43) Veröffentlichungstag der Anmeldung: **30.07.2003**
(21) Anmeldenummer: 03075201.8
(22) Anmeldetag: 20.01.2003
(51) Int. Cl.: F16K 31/08, F16K 31/06

(54) **Impulsbetriebener Elektromagnet**

(30) Priorität: 26.01.2002 DE 10203013
(71) Anmelder: Danfoss A/S, 6430 Nordborg (DK)
(72) Erfinder: Birkelund, Michael, 5500 Middelfart (DK); Larsen, Soren Michael, 5210 Odense NV (DK); Jorgensen, Erik Casper, 8660 Skanderborg (DK)

(57) **Zusammenfassung**

Ein impulsbetriebener Elektromagnet (1), insbesondere für ein Magnetventil (1, 2), enthält eine Spule (3) zur Erzeugung eines Magnetfeldes in einem Magnetkreis, der einen magnetisch leitenden Hauptkern (5), ein magnetisch leitendes Kernstück (7) und einen mit dem Kernstück (7) zusammenwirkenden Anker (13) aufweist. Ferner enthält der Elektromagnet einen lösbar befestigten Dauermagneten (37), dessen Magnetfeld dem der Spule (3) zumindest teilweise überlagert ist.

Um den Elektromagneten (1) ohne aufwendigen Umbau mit oder ohne Dauermagneten zu betreiben, ist der Dauermagnet (37) außerhalb des Magnetkreises angeordnet.

## Beschreibung

Die Erfindung bezieht sich auf einen impulsbetriebenen Elektromagneten, insbesondere für ein Magnetventil, mit einer Spule zur Erzeugung eines Magnetfeldes in einem Magnetkreis, der einen magnetisch leitenden Hauptkern, ein magnetisch leitendes Kernstück und einen mit dem Kernstück zusammenwirkenden Anker aufweist, und mit einem lösbar befestigten Dauermagneten, dessen Magnetfeld dem der Spule zumindest teilweise überlagert ist.

Bei einem Elektromagneten dieser Art, wie er aus der US-Patentschrift 5 584 465 bekannt ist, wird der mit dem Verschlußstück eines Magnetventils verbundene Anker bei Hindurchleitung eines Stromimpulses durch die Spule gegen das Kernstück gezogen, um das Magnetventil zu öffnen. Nach Wegnahme des Stromimpulses wird der Anker durch den Dauermagneten am Kernstück festgehalten, so daß das Magnetventil stromlos geöffnet bleibt. Bei Hindurchleitung eines umgepolten Stromimpulses durch die Spule wird der Anker durch Federkraft vom Kernstück abgestoßen und das Magnetventil nach Wegnahme des Stromimpulses stromlos geschlossen gehalten.

Auf diese Weise ist das Magnetventil energiesparend betreibbar, was bei einer Stromversorgung der Spule aus einer Batterie vorteilhaft ist, weil deren Lebensdauer verlängert würde. Bei einer Stromversorgung der Spule aus einem Stromversorgungsnetz könnte dagegen auf einen die Kosten des Magnetventils erhöhenden Dauermagneten verzichtet werden.

Der Dauermagnet des bekannten Elektromagneten ist ein koaxial polarisierter Ring, der einen zylindrischen, koaxialen Fortsatz des Spulenträgers und einen aus einem Führungsrohr für den Anker herausragenden Endabschnitt des Kernstücks umgibt. Ein als Sicherungselement dienender Federring drückt über eine neben dem Hauptkern einen weiteren Teil des Magnetkreises bildende Unterlegscheibe auf den Dauermagneten. Dadurch wird der Dauermagnet an den die Spule und den Spulenträger umgebenden Hauptkern gedrückt.

Um den Elektromagneten wahlweise mit oder ohne Dauermagneten betreiben zu können, ist ein aufwendiger Umbau des Elektromagneten erforderlich, da ohne den Dauermagneten ein großer Luftspalt zwischen dem Kernstück und dem Hauptkern entstehen würde.

Der Erfindung liegt die Aufgabe zugrunde, einen Elektromagneten der eingangs geschilderten Art anzugeben, der ohne aufwendigen Umbau ohne einen oder mit einem Dauermagneten betreibbar ist.

Erfindungsgemäß ist diese Aufgabe dadurch gelöst, daß der Dauermagnet außerhalb des Magnetkreises angeordnet ist.

Bei dieser Lösung kann der Dauermagnet auf einfache Weise vorgesehen sein oder nicht, um den Elektromagneten ohne aufwendigen Umbau mit oder ohne Dauermagneten zu betreiben, wobei der Dauermagnet auch bei bereits vorhandenen Elektromagneten, die keinen Dauermagneten aufweisen, nachträglich ergänzt werden kann.

Vorzugsweise ist dafür gesorgt, daß in einem von der Spule umgebenen Spulenträger ein den Anker enthaltendes Führungsrohr lose gelagert ist, in dem das Kernstück befestigt ist, daß der Dauermagnet als Sicherungselement oder als Teil des Sicherungselements ausgebildet ist, und daß das Sicherungselement das Kernstück und/oder das Führungsrohr mit dem Hauptkern verbindet. Bei dieser Ausbildung hat der Dauermagnet gleichzeitig eine Sicherungsfunktion, um das Kernstück und/oder das Führungsrohr mit dem Magnetkreis zu verbinden.

Vorzugsweise ist dafür gesorgt, daß das Sicherungselement durch eine Schraubverbindung mit dem Kernstück und/oder dem Führungsrohr verbunden ist. Diese Verbindung läßt sich auf einfache Weise herstellen und lösen, insbesondere wenn das Sicherungselement eine Mutter, insbesondere Überwurfmutter aufweist, die dann auf einen mit Außengewinde versehenen Endabschnitt des Kernstücks auf- oder abgeschraubt werden kann. Zu diesem Zweck ist die Mutter vorzugsweise gerändelt, so daß sie leicht manuell festgezogen oder gelöst werden kann.

Um das Sicherungselement nicht als Ganzes als Dauermagnet auszubilden, kann der Dauermagnet fest mit der Mutter verbunden sein, z.B. durch Anbördelung an der Mutter oder Fixierung innerhalb der Mutter.

Sodann kann das Sicherungselement das Kernstück und/oder das Führungsrohr durch die Dauermagnetkraft mit dem Hauptkern verbinden. Hierbei muß die Dauermagnetkraft nur hinreichend hoch sein. Eine andere Verbindung zwischen dem Sicherungselement und dem Kernstück und/oder dem Führungsrohr kann dann entfallen. Das Sicherungselement kann dann einfach am Hauptkern und Kernstück oder am Hauptkern und einem das Kernstück topfartig abdeckenden Führungsrohr anliegen.

Die Erfindung und ihre Weiterbildungen werden nachstehend anhand der beiliegenden Zeichnungen bevorzugter Ausführungsbeispiele näher beschrieben. Darin stellen dar:
- Fig. 1: einen Axialschnitt durch ein Magnetventil mit einem ersten Ausführungsbeispiel eines erfindungsgemäßen Elektromagneten im betätigten Zustand, in dem das Ventil geschlossen ist,
- Fig. 2: einen Axialschnitt durch dasselbe Magnetventil, das in Fig. 1 dargestellt ist, jedoch im unbetätigten Zustand, in dem das Magnetventil geöffnet ist,
- Fig. 3: eine perspektivische Ansicht des in den Fig. 1 und 2 dargestellten Magnetventils,
- Fig. 4: einen Axialschnitt durch ein Magnetventil mit einem zweiten Ausführungsbeispiel eines erfindungsgemäßen Elektromagneten und
- Fig. 5: einen Axialschnitt durch ein Magnetventil mit einem dritten Ausführungsbeispiel eines erfindungsgemäßen Elektromagneten.

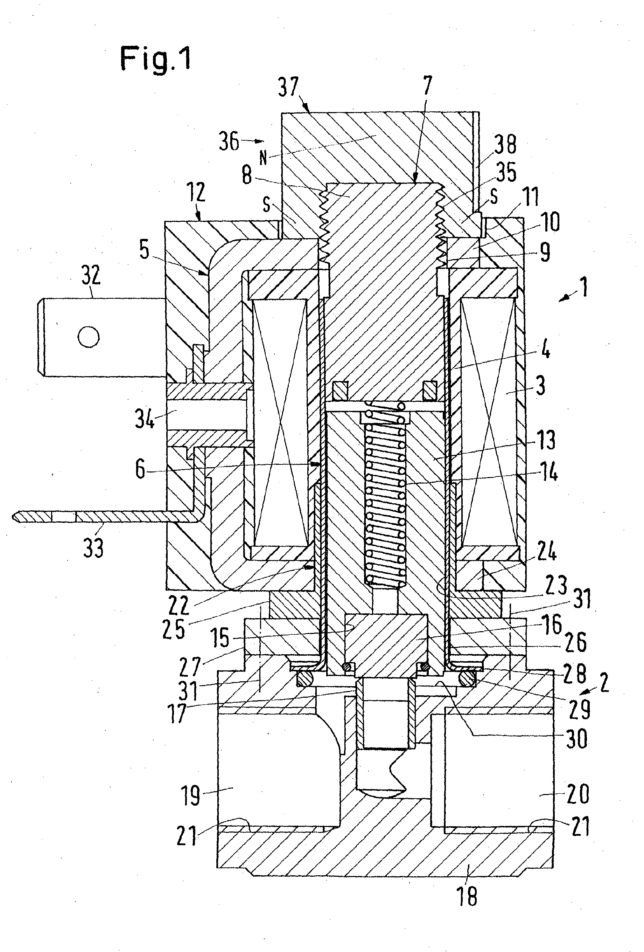

Das Magnetventil nach den Fig. 1 bis 3 besteht aus einem erfindungsgemäßen Elektromagneten 1 und einem Ventil 2. Der Elektromagnet enthält eine Spule 3 in einem Spulenträger 4. Ferner enthält er einen U-förmigen Hauptkern 5 aus magnetisch leitendem Material. Im Spulenträger 4 ist ein Führungsrohr 6 aus nicht magnetisch leitendem Material lose eingesetzt. In dem einen Endabschnitt des Führungsrohrs 6 ist ein ebenso wie der Hauptkern 5 im Magnetkreis der Spule 3 liegendes Kernstück 7 aus magnetisch leitendem Material befestigt, dessen einer Endabschnitt 8 aus dem Führungsrohr 6 durch eine Bohrung 9 im einen Schenkel 10 des Hauptkerns 5 und durch ein Loch 11 in einem Gehäuse 12 des Elektromagneten 1 aus Kunstharz nach außen ragt. In dem Kunstharz sind der Hauptkern 5 und die Spule 3 sowie der Spulenträger 4 eingebettet. Im Führungsrohr 6 ist ferner ein Anker 13 aus magnetisch leitendem Material axial geführt, wobei er sich über eine Feder 14 am inneren Ende des Kernstücks 7 abstützt. In einer Bohrung 15 in seinem dem Kernstück 7 abgewandten Ende enthält der Anker 13 ein Verschlußstück 16 des Ventils 2, das mit einem Ventilsitz 17 im Gehäuse 18 des Ventils 2 zusammenwirkt. Im Gehäuse 18 des Ventils 2 sind ferner eine Einlaßöffnung 19 und eine Auslaßöffnung 20 jeweils mit Innengewinde 21 für den Anschluß von Fluidleitungen ausgebildet.

Ein weiterer hülsenförmiger Kernteil 22 aus magnetisch leitendem Material ist durch eine Bohrung 23 im anderen Schenkel 24 des Hauptkerns 5 hindurch koaxial in den Spulenträger 4 eingeführt, so daß der Kernteil 22 sowohl in der Bohrung 23 des Hauptkerns 5 als auch am Spulenträger 4 und dem Führungsrohr 6 anliegt. Ferner hat der Kernteil 22 an seinem freien Ende einen Flansch 25, der außen am Schenkel 24 und am Gehäuse 12 anliegt. Der dem Kernstück 7 abgekehrte Endabschnitt 26 des Führungsrohrs 6 ist von einem Montagering 27 umgeben und an seinem freien Ende mit einem Flansch 28 versehen. Der Flansch 28 liegt an der dem Ventilgehäuse 18 zugekehrten Seite des Montagerings 27 und über einen Dichtring 29 an einer Schulter 30 im Durchflußkanal des Ventilgehäuses 18 an. Der Elektromagnet 1 ist mittels den Montagering 27 durchsetzender und in das Ventilgehäuse 18 geschraubter Schrauben 31 mit dem Ventil 2 verbunden.

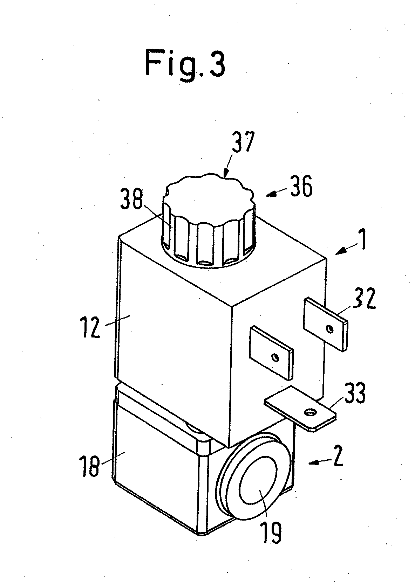

Zwei aus dem Gehäuse 12 des Elektromagneten 1 herausragende Kontakte 32 (vergleiche auch Fig. 3) sind jeweils mit den Enden der Spule 3 verbunden. Ein weiterer aus dem Gehäuse 12 herausragender Kontakt 33 ist ebenso wie eine Steckbuchse 34 mit dem Hauptkern 5 verbunden. Die Kontakte 32 dienen dem Anschluß von Stromversorgungsleitungen durch einen Stecker, der gleichzeitig einen Erdungsleiter mit dem Kontakt 33 oder mit der Steckbuchse 34 verbinden kann.
Der Endabschnitt 8 des Kernstücks 7 hat ein Außengewinde 35, auf das ein Sicherungselement 36 in Form einer Überwurfmutter 37 geschraubt ist. Das Sicherungselement 36 liegt außen am Schenkel 10 des Hauptkerns 5 oder außen am Gehäuse 12 an, wenn sich dieses bis unmittelbar an den Rand der Öffnung 9 oder an das Kernstück 7 erstreckt, und verbindet im gespannten Zustand die die Bauteile 3, 4, 5, 12 und 25 aufweisende Einrichtung über das Kernstück 7, das Führungsrohr 6 und den Montagering 27 mit dem Ventil 2. Nach dem Lösen des Sicherungselements 36 kann diese Einrichtung von dem Führungsrohr 6 und dem Kernstück 7 abgezogen werden. Nach Lösen der Schrauben 31 kann auch das Führungsrohr 6 mit dem Kernstück 7 aus dem Montagering 22 herausgezogen und der Anker 13 mit der Feder 14 aus dem Führungsrohr 6 entfernt werden. Um die Überwurfmutter 37 leichter manuell betätigen zu können, ist sie mit einer Rändelung 38 versehen.

Das Sicherungselement 36 ist als Dauermagnet ausgebildet, nicht jedoch die übrigen, den Magnetkreis der Spule 3 bildenden Bauelemente 5, 7, 13 und 22, deren Material zwar magnetisch leitend, aber nicht dauermagnetisch ist. Zur Erzielung einer besonders hohen Dauermagnetkraft kann das Sicherungselement 36 ein Gemisch aus Neodym, Eisen und Bor aufweisen.

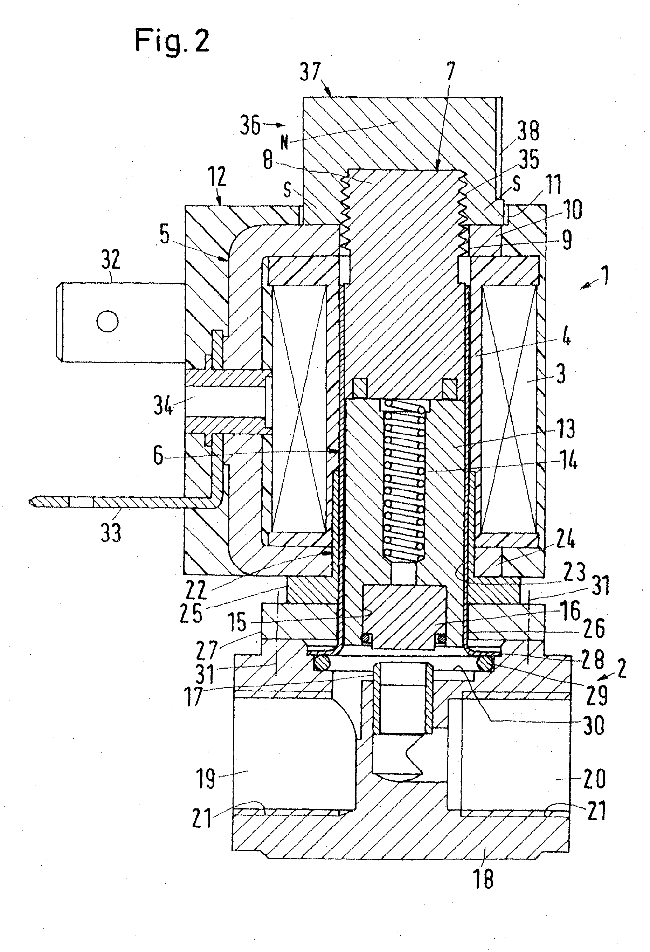

In der in Fig. 1 dargestellten Lage des Ankers 13 ist die Spule 3 stromlos. Die Feder 14 drückt daher das Verschlußstück 16 über den Anker 13 gegen die Magnetkraft des Sicherungselements 36 auf den Ventilsitz 17, so daß das Ventil 2 geschlossen ist. Wenn jetzt ein kurzer, entsprechend starker Stromimpuls in der einen Richtung durch die Spule 3 geleitet wird, wird der Anker 13 gegen die Kraft der Feder 14 durch das Magnetfeld der Spule 3 und des Sicherungselements 36 an das Kernstück 7 gezogen, so daß das Verschlußstück 16 vom Ventilsitz 17 abgehoben und das Ventil 2 geöffnet wird, wie es in Fig. 2 dargestellt ist. Auch nach dem Verschwinden des Stromimpulses wird der Anker 13 weiterhin durch die Dauermagnetkraft des Sicherungselements 36 am Kernstück 7 festgehalten, da sie stärker als die Kraft der Feder 14 bemessen ist. Durch einen entgegengesetzt gerichteten, entsprechend starken Stromimpuls wird der Anker 13 dagegen wieder durch das Magnetfeld der Spule 3 und die Feder 14 gegen die Dauermagnetkraft des Sicherungselements 36 abgestoßen, so daß das Ventil wieder geschlossen wird und nach dem Verschwinden des Stromimpulses geschlossen bleibt.

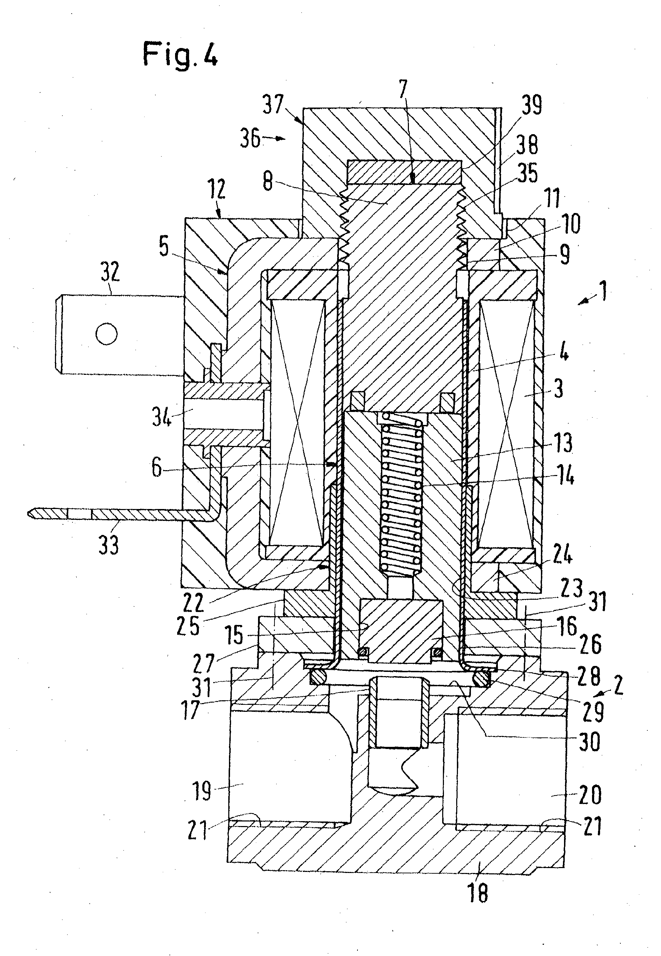

Das Ventil 2 kann daher ohne Energieverbrauch im geöffneten oder geschlossenen Zustand gehalten werden. Dies würde bei einer Stromversorgung der Spule 3 aus einer Batterie deren Lebensdauer verlängern. Bei einer Stromversorgung der Spule 3 aus einem Stromversorgungsnetz und/oder um die Kosten des Elektromagneten 1 niedrig zu halten, kann dagegen anstelle der dauermagnetischen Überwurfmutter 37 eine normale, nicht magnetische Mutter verwendet werden, ohne den Aufbau der Baueinheit oder des gesamten Magnetventils im übrigen ändern zu müssen. Bei bereits installierten Magnetventilen oder Elektromagneten mit dem dargestellten Aufbau, bei dem die Überwurfmutter 37 nicht dauermagnetisch ist, kann der Elektromagnet auf einfache Weise nachträglich durch Austauschen der Überwurfmutter 37 gegen eine dauermagnetische umgerüstet werden, wenn dies erwünscht ist. Das Ausführungsbeispiel nach Fig. 4 unterscheidet sich von dem nach den Fig. 1 bis 3 nur dadurch, daß die Überwurfmutter 37 innen mit einem Dauermagneten 39 versehen ist und mit diesem eine Baueinheit bildet. Zur Erzielung einer besonders hohen Dauermagnetkraft kann der Dauermagnet 39 ebenfalls ein Gemisch aus Neodym, Eisen und Bor aufweisen. Der Dauermagnet 39 kann im Reibschluß oder mittels Klebstoff in der Überwurfmutter 37 befestigt sein. Er ist so polarisiert, daß der eine Pol am Kernstück 7 und der andere am Boden der Überwurfmutter 37 anliegt. Die Wirkungsweise und der Aufbau des Elektromagneten 1 bzw. des gesamten Magnetventils sind im übrigen die gleichen wie die des ersten Ausführungsbeispiels nach den Fig. 1 bis 3.

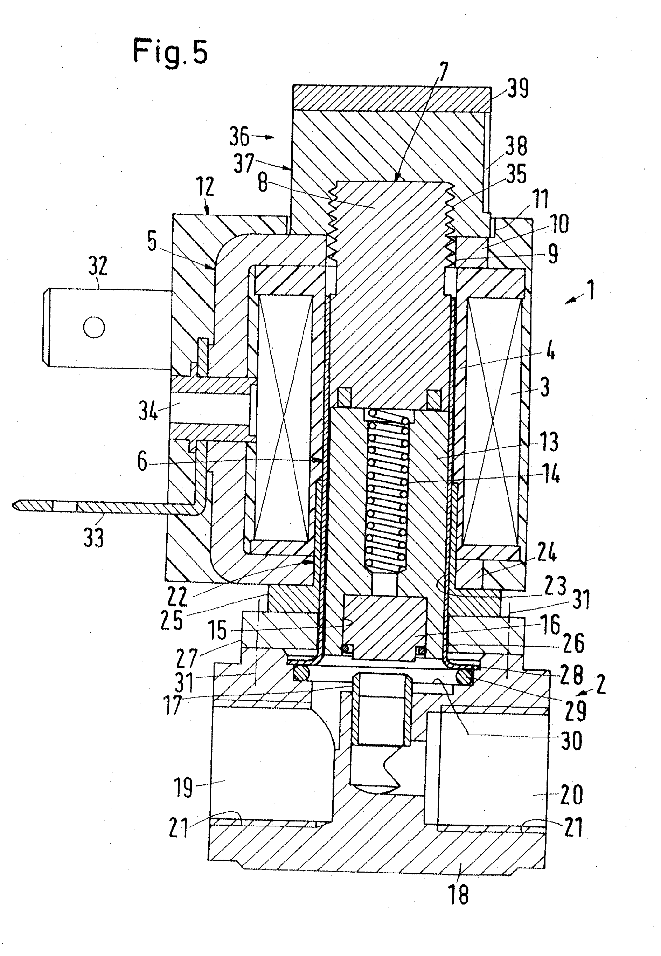

Auch das Ausführungsbeispiel nach Fig. 5 unterscheidet sich von dem nach der Fig. 4 nur dadurch, daß der Dauermagnet 39 nicht in, sondern auf der Überwurfmutter 37 befestigt ist, vorzugsweise angeklebt. Er kann aber auch angebördelt oder auf andere Weise befestigt sein. Die Wirkungsweise ist wiederum die gleiche wie die der vorhergehenden Ausführungsbeispiele.

Abwandlungen der dargestellten Ausführungsbeispiele sind ebenfalls möglich. So kann das Führungsrohr 6 auf seiten des Kernstücks 7 topfartig geschlossen sein und das Kernstück 7 auch an seinem dem Anker 13 abgewandten Ende abdecken, wobei der das Kernstück abdeckende Teil des Führungsrohrs aus magnetisch leitendem Material hergestellt sein und das Außengewinde des Kernstücks 7 entfallen kann. Statt dessen kann das Führungsrohr zum Aufschrauben des Sicherungselements 36 mit einem Außengewinde versehen sein oder das Sicherungselement 36 entfallen, wenn das Kernstück 7 auf andere Weise im Führungsrohr 6 befestigt ist, so daß nur ein Dauermagnet außen an der Einrichtung angebracht zu werden braucht, die die Spule 3, den Hauptkern 5, das Führungsrohr 6 und gegebenenfalls den Spulenträger 4 aufweist und gegebenenfalls mit diesen Bauteilen eine Baueinheit bildet, die durch das Gehäuse 12 zusammengehalten sein kann.

Statt der Gewindeverbindung kann das Sicherungselement 36 oder ein Dauermagnet allein das Kernstück 7 und/oder das Führungsrohr 6 durch die Dauermagnetkraft mit dem Hauptkern 5 verbinden. Hierbei können das Außengewinde des Kernstücks 7 und das Innengewinde des Sicherungselements 36 entfallen. Das Kernstück 7 kann bündig mit der Außenseite des Schenkels 10 abschließen und die Bohrung im Sicherungselement 36 entfallen, so daß das Sicherungselement 36 weiterhin an der Stirnseite des Kernstücks 7 anliegt, jedoch nur durch seine Dauermagnetkraft mit dem Kernstück 7 verbunden ist.

Bei dem Ausführungsbeispiel nach den Fig. 1 bis 3 kann das Sicherungselement 36 nicht axial, wie dargestellt, sondern radial polarisiert sein, so daß beispielsweise der Südpol am Gewinde und der Nordpol außen liegt.

## Patentansprüche

1. Impulsbetriebener Elektromagnet (1), insbesondere für ein Magnetventil (1, 2), mit einer Spule (3) zur Erzeugung eines Magnetfeldes in einem Magnetkreis, der einen magnetisch leitenden Hauptkern (5), ein magnetisch leitendes Kernstück (7) und einen mit dem Kernstück (7) zusammenwirkenden Anker (13) aufweist, und mit einem lösbar befestigten Dauermagneten (37, 39), dessen Magnetfeld dem der Spule (3) zumindest teilweise überlagert ist, **dadurch gekennzeichnet, daß** der Dauermagnet (37, 39) außerhalb des Magnetkreises angeordnet ist.

2. Elektromagnet nach Anspruch 1, **dadurch gekennzeichnet, daß** in einem von der Spule (3) umgebenen Spulenträger (4) ein den Anker (13) enthaltendes Führungsrohr (6) lose gelagert ist, in dem das Kernstück (7) befestigt ist, daß der Dauermagnet (37) als Sicherungselement (36) oder als Teil (39) des Sicherungselements (36) ausgebildet ist, und daß das Sicherungselement (36) das Kernstück (7) und/oder das Führungsrohr (6) mit dem Hauptkern (5) verbindet.

3. Elektromagnet nach Anspruch 2, **dadurch gekennzeichnet, daß** das Sicherungselement (36) durch eine Schraubverbindung mit dem Kernstück (7) und/oder dem Führungsrohr (6) verbunden ist.

4. Elektromagnet nach Anspruch 2 oder 3, **dadurch gekennzeichnet, daß** das Sicherungselement (36) eine Mutter (37) aufweist, die auf einem freien Endabschnitt (8) des Kernstücks (7) aufgeschraubt ist.

5. Elektromagnet nach Anspruch 4, **dadurch gekennzeichnet, daß** die Mutter (37) eine Überwurfmutter ist.

6. Elektromagnet nach Anspruch 5, **dadurch gekennzeichnet, daß** die Überwurfmutter (37) am Umfang eine Rändelung (38) aufweist.

7. Elektromagnet nach einem der Ansprüche 2 bis 6, **dadurch gekennzeichnet, daß** der Dauermagnet (39) fest mit der Mutter (37) verbunden ist.

8. Elektromagnet nach Anspruch 2, **dadurch gekennzeichnet, daß** das Sicherungselement (36) das Kernstück (7) und/oder das Führungsrohr (6) durch die Dauermagnetkraft mit dem Hauptkern (5) verbindet.
